# FASCICULE DE BREVET EUROPEEN

(11) **EP 3 924 864 B1**
(45) Date de publication et mention de la délivrance du brevet: **15.01.2025**
(21) Numéro de dépôt: 20706579.8
(22) Date de dépôt: 07.02.2020
(51) Int. Cl.: G06F 21/62, G06N 5/025, G06N 5/01

(54) **SYSTÈMES INFORMATIQUES ET PROCÉDÉS D'ASSISTANCE AU REMPLISSAGE DE FORMULAIRES EN LIGNE**
RECHNERSYSTEME UND VERFAHREN ZUR UNTERSTÜTZUNG BEIM AUSFÜLLEN VON ONLINE-FORMULAREN
COMPUTER SYSTEMS AND METHODS FOR ASSISTING WITH THE COMPLETION OF ONLINE FORMS

(30) Priorité: 13.02.2019 FR 1901454
(43) Date de publication de la demande: 22.12.2021
(73) Titulaire: SOFTEAM, 94200 Ivry-sur-Seine (FR)
(72) Inventeur: NICOLAS, Olivier, 31830 Plaisance-du-Touch (FR); GONCALVES, Laurent, 31470 Fonsorbes (FR)
(74) Mandataire: Plasseraud IP
(86) Numéro de dépôt international: PCT/FR2020/050217
(87) Numéro de publication internationale: WO 2020/165531

(56) Documents cités:
- US-A1- 2008 120 257
- FIRMENICH SERGIO ET AL: "Supporting Users Tasks with Personal Information Management and Web Forms Augmentation", 23 July 2012, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 268 - 282, ISBN: 978-3-642-17318-9, XP047419903
- ANONYMOUS: "Bookmarklet - Wikipedia", 10 May 2015 (2015-05-10), XP055601519, Retrieved from the Internet <URL:https://en.wikipedia.org/w/index.php?title=Bookmarklet&oldid=661687764> [retrieved on 20190702]
- XIAONAN GUO ET AL: "OPAL : a passe-partout for web forms", PROCEEDINGS OF THE 21ST INTERNATIONAL CONFERENCE COMPANION ON WORLD WIDE WEB, WWW '12 COMPANION, 2012, New York, New York, USA, pages 353, XP055635422, ISBN: 978-1-4503-1230-1, DOI: 10.1145/2187980.2188047
- ARAUJO SAMUR ET AL: "Carbon: Domain-Independent Automatic Web Form Filling", 5 July 2010, INTERNATIONAL CONFERENCE ON COMPUTER ANALYSIS OF IMAGES AND PATTERNS. CAIP 2017: COMPUTER ANALYSIS OF IMAGES AND PATTERNS; [LECTURE NOTES IN COMPUTER SCIENCE; LECT.NOTES COMPUTER], SPRINGER, BERLIN, HEIDELBERG, PAGE(S) 292 - 306, ISBN: 978-3-642-17318-9, XP047404492

## Description

### Domaine technique

La présente invention concerne le domaine du remplissage de formulaire en ligne. Plus précisément, il concerne des systèmes informatiques et procédés d'assistance au remplissage par un internaute de champs de formulaires en ligne.

### Technique antérieure

Un formulaire en ligne est une page d'un site Internet qui permet à une organisation de récupérer des objets numériques (dossiers administratifs, plans, cartes, factures, vidéogrammes, enregistrements téléphoniques, données personnelles etc.).

Pour faciliter la saisie des formulaires de commande ou d'inscription sur Internet, les navigateurs Web proposent une fonctionnalité de remplissage automatique. En pratique, lorsque l'on insère des objets numériques dans un formulaire en ligne, les navigateurs nous proposent de les enregistrer. Ensuite, on utilise les objets numériques préenregistrés pour remplir de nouveaux formulaires, ailleurs sur Internet.

Toutefois, malgré le gain de temps appréciable, une telle fonctionnalité peut poser de sérieux problèmes de sécurité vis-à-vis des objets numériques. En effet, sans le consentement de l'internaute, une personne malveillante peut récupérer ces objets numériques. En effet, le navigateur stocke certains objets numériques en clair, dans un fichier. Certaines fois, on crypte le fichier à partir de fonctions de cryptage présentes sur l'ordinateur sur lequel le navigateur Web est installé. Dans ce cas, un virus qui infecte l'ordinateur pourra accéder aux fonctions de cryptage et ainsi aux objets numériques présents dans le fichier.

Au vu des risques juridiques encourus par les organisations qui exploitent les sites Web, il convient de proposer une solution qui leur permet de gagner du temps dans le remplissage de formulaires en ligne et de préserver la sécurité des objets numériques qui appartiennent aux internautes.

Il est connu, de l'article « Supporting Users Tasks with Personal Information Management and Web Forms Augmentation », Sergio Firmenich et al., International Conference on Computer Analysis of Images and Patterns, 23 juillet 2012 (ci-après « REF1 »), de constituer un espace d'informations personnelles qui stocke les objets numériques de l'internaute. Cet espace d'informations personnelles est alors utilisé pour assister l'internaute à remplir un formulaire en ligne d'une page Web. Toutefois, une telle approche nécessite pour l'internaute de préremplir l'espace d'informations personnelles avec tous ses objets numériques. En outre, si un virus infecte l'ordinateur sur lequel l'espace d'informations personnelles est stocké, tous les objets numériques de l'internaute seront exposés.

### Résumé de l'invention

La présente invention vise donc à pallier les inconvénients précités. Pour cela, un premier aspect de l'invention propose un système informatique pour l'assistance au remplissage par un internaute, d'au moins un champ de formulaire en ligne d'une page Web.

Ensuite, un deuxième aspect de l'invention propose un procédé d'assistance au remplissage par un internaute, d'au moins un champ de formulaire en ligne d'une page Web.

Puis, un troisième aspect de l'invention propose un procédé d'entraînement d'un modèle d'apprentissage automatique pour identifier dans une page Web une sémantique prédéterminée d'au moins un champ de formulaire en ligne.

Enfin, un quatrième aspect de l'invention propose un support de stockage lisible par ordinateur non transitoire stockant au moins un programme comprenant des instructions qui lors de l'exécution du programme, permettent d'amener l'ordinateur à réaliser le deuxième aspect de l'invention et le troisième aspect de l'invention.

Ainsi, l'invention concerne un système informatique pour l'assistance au remplissage par un internaute, d'au moins un premier champ de formulaire en ligne, d'une première page Web, le premier champ de formulaire en ligne étant prévu pour recevoir un premier objet numérique de l'internaute, en outre, le premier champ de formulaire en ligne étant associé à au moins une métadonnée. Le système informatique comprend :
- au moins un navigateur pour visiter la première page Web au travers d'un réseau de communication,
- un script pour être inséré dans la première page Web,
- des coffres-forts numériques qui sont associés à des deuxièmes pages Web, chaque coffre-fort numérique étant configuré pour stocker au moins un premier objet numérique de l'internaute provenant de la deuxième page Web associée et étant agencé de manière à communiquer avec le script, et
- une interface de programmation d'application, ci-après appelée API, qui est agencée de manière à communiquer avec le script, et qui comprend une base de données décrivant la sémantique des objets numériques stockés dans le coffre-fort numérique, et dans lequel,
- le script, lorsqu'il est exécuté,
   - acquiert la métadonnée,
   - crée un premier vecteur à partir de la métadonnée,
   - envoie à l'API un premier message comprenant le vecteur,
- l'API, lorsqu'il est exécuté, en réponse au premier message,
   - identifie une première sémantique prédéterminée associée au premier champ de formulaire en ligne, ci-après appelé SEM1, à partir de la métadonnée et d'un modèle d'apprentissage automatique préentraîné à base de règles, aussi appelé *rule-based machine learning* en anglais,
   - identifie l'ensemble des coffres-forts numériques dans lesquels se trouve SEM1, ci-après appelés coffres-forts numériques compatibles, et
   - envoie au script un second message comprenant le SEM1 et la liste des coffres-forts numériques compatibles,
- le script, lorsqu'il est exécuté, en réponse au second message, interroge tout ou partie des coffres-forts numériques compatibles à partir SEM1, de sorte que chacun desdits coffres-forts numériques retourne au script au moins un premier objet numérique de l'internaute correspondant au SEM1, et
- en réponse à la réception d'au moins un premier objet numérique de l'internaute, le script, lorsqu'il est exécuté, modifie la première page Web pour inviter l'internaute à remplir le premier champ de formulaire en ligne avec au moins le premier objet numérique de l'internaute.

Ainsi, le système informatique vise à assister un internaute à remplir un formulaire en ligne d'une première page Web avec des objets numériques de l'internaute, que cet internaute a déjà renseignés dans des formulaires en ligne d'autres (deuxièmes) pages Web. Ces objets numériques sont stockés dans des coffres-forts numériques associés à ces autres pages Web.

A cet effet, le système informatique utilise notamment une API, qui communique avec un script de la première page Web. L'API a pour fonction d'identifier une première sémantique SEM1 prédéterminée à partir d'une métadonnée reçue du script et d'un modèle d'apprentissage automatique pré-entraîné.

L'API a également pour fonction d'identifier les coffres-forts numériques dits compatibles dans lesquels se trouve la première sémantique SEM1, non connus *a priori* du script.

La sémantique SEM1 et la liste des coffres-forts numériques compatibles sont envoyées par l'API au script de la première page Web. C'est le script qui interroge tout ou partie des coffres-forts compatibles pour récupérer l'objet numérique correspondant à la première sémantique SEM1. L'objet numérique reçu est utilisé pour assister l'internaute à remplir le formulaire en ligne de la première page Web.

Ainsi, le système informatique permet, grâce notamment à l'API, de réutiliser des objets numériques qui ont déjà été utilisés dans des formulaires en ligne d'autres (deuxièmes) pages Web. Grâce à cette réutilisation, il n'est pas nécessaire de reconstituer entièrement un espace d'informations personnelles associé à cet internaute, comme c'est le cas dans l'article REF1.

En outre, les objets numériques sont stockés dans plusieurs coffres-forts numériques différents, de sorte qu'il est possible qu'aucun coffre-fort numérique ne comporte tous les objets numériques de l'internaute, ce qui améliore la sécurité, contrairement à l'espace d'informations personnelles de l'article REF1.

Enfin, les objets numériques ne transitent pas par l'API, et sont échangés entre les coffres-forts compatibles et le script sans passer par l'API, qui se contente d'aider le script à identifier les coffres-forts numériques dits compatibles dans lesquels se trouve la première sémantique SEM1. Par conséquent, l'introduction de l'API n'introduit pas de problème de sécurité puisqu'aucun accès non autorisé à l'API ne peut compromettre les objets numériques de l'internaute.

La sécurité est également renforcée par le fait que le script, sans l'API, ne sait pas *a priori* où il peut récupérer les objets numériques, contrairement à l'article REF1 dans lequel les objets numériques dans un espace d'informations personnelles unique identifié *a priori.*

De plus, le script s'exécutant sur le navigateur de l'internaute, les objets numériques sont récupérés du coffre-fort directement par le script dans le navigateur de l'internaute, lesdits objets numériques ne transitant pas par l'API ou par un intermédiaire, ce qui renforce la sécurité de la solution.

Dans une mise en œuvre, le système informatique comprend en outre un moteur d'entraînement du modèle d'apprentissage automatique préentraîné, et dans lequel :
- le script, lorsqu'il est exécuté à la suite du refus de l'internaute de remplir le champ de formulaire avec le premier objet numérique de l'internaute, mais plutôt avec un deuxième objet numérique de l'internaute provenant du coffre-fort numérique et qui est associée avec une deuxième sémantique prédéterminée, ci-après appelé SEM2, différente de SEM1,
   - crée un second vecteur à partir de SEM2 et de la métadonnée, et
   - envoie le second vecteur courant au moteur d'entraînement,
- en réponse à la réception du second vecteur, le moteur d'entraînement entraîne le modèle d'apprentissage automatique préentraîné à partir du second vecteur et d'un algorithme d'apprentissage de modèle à base de règles, aussi appelé *rule-based machine learning* en anglais. Dans une mise en œuvre, le script est un marque-page scripté, aussi appelé *bookmarklet* en anglais.

L'invention couvre également un procédé d'assistance au remplissage par un internaute, d'au moins un premier champ de formulaire en ligne d'une première page Web, le premier champ de formulaire en ligne étant prévu pour recevoir un premier objet numérique de l'internaute, en outre, le premier champ de formulaire en ligne étant associé à au moins une métadonnée. Le procédé comprend les étapes suivantes :
- fournir au moins un navigateur pour visiter la première page Web au travers d'un réseau de communication,
- fournir un script pour être inséré dans la première page Web,
- fournir des coffres-forts numériques qui sont associés à des deuxièmes pages Web, chaque coffre-fort numérique étant configuré pour stocker au moins un premier objet numérique de l'internaute provenant de la deuxième page Web associée, et étant agencé de manière à communiquer avec le script, et
- fournir une interface de programmation d'application, ci-après appelée API, qui est agencée de manière à communiquer avec le script, et qui comprend une base de données décrivant la sémantique des objets numériques stockés dans le coffre-fort numérique, et
   le procédé comprenant en outre les étapes suivantes,
- instruire le script pour, lorsqu'il est exécuté
   - acquérir la métadonnée,
   - créer un premier vecteur à partir de la métadonnée,
   - envoyer à l'API un premier message comprenant le vecteur,
- instruire l'API pour, lorsqu'il est exécuté, en réponse au premier message,
   - identifier une première sémantique prédéterminée associée au premier champ de formulaire en ligne, ci-après appelé SEM1, à partir de la métadonnée et d'un modèle d'apprentissage automatique préentraîné à base de règles, aussi appelé *rule-based machine learning* en anglais,
   - identifier l'ensemble des coffres-forts numériques dans lesquels se trouve SEM1, ci-après appelés coffres-forts numériques compatibles, et
   - envoyer au script un second message comprenant le SEM1 et la liste des coffres-forts numériques compatibles,
- instruire le script pour, lorsqu'il est exécuté, en réponse au second message, interroger tout ou partie des coffres-forts numériques compatibles à partir de SEM1, de sorte que chacun desdits coffres-forts numériques retourne au script au moins un premier objet numérique de l'internaute correspondant à SEM1, et
- en réponse à la réception d'au moins un premier objet numérique de l'internaute, lorsque le script est exécuté, modifier la première page Web pour inviter l'internaute à remplir le premier champ de formulaire en ligne avec au moins le premier objet numérique de l'internaute.

Dans une mise en œuvre, le procédé comprend en outre les étapes suivantes :
- instruire le script pour, lorsqu'il est exécuté à la suite du refus de l'internaute de remplir le champ de formulaire avec le premier objet numérique de l'internaute, mais plutôt avec un deuxième objet numérique de l'internaute provenant du coffre-fort numérique et qui est associée avec une deuxième sémantique prédéterminée, ci-après appelé SEM2, différente de SEM1,
   - créer un second vecteur à partir de SEM2 et de la métadonnée, et
   - envoyer le second vecteur courant à un moteur d'entraînement du modèle d'apprentissage automatique préentraîné,
- en réponse à la réception du second vecteur, entraîner, par le moteur d'entraînement, le modèle d'apprentissage automatique préentraîné à partir du second vecteur et d'un algorithme d'apprentissage de modèle à base de règles, aussi appelé *rule-based machine learning* en anglais. Dans une mise en œuvre, le script est un marque-page scripté, aussi appelé *bookmarklet* en anglais.

Dans une mise en œuvre, le modèle d'apprentissage automatique préentraîné est obtenu par entraînement d'un modèle d'apprentissage automatique, l'entrainement du modèle d'apprentissage automatique comprenant les étapes suivantes, pour chacun parmi une pluralité de champs de formulaire en ligne d'entraînement provenant d'une pluralité de page Web d'entraînement, chaque champ de formulaire en ligne d'entraînement étant associé à au moins une métadonnée :
- associer au champ de formulaire en ligne d'entraînement à une sémantique prédéterminée, ci-après appelé SEM,
- acquérir au moins une métadonnée associée au champ de formulaire en ligne d'entraînement,
- créer un troisième vecteur à partir de SEM et de la métadonnée,
- entraîner le modèle d'apprentissage automatique à partir du troisième vecteur et d'un algorithme d'apprentissage de modèle à base de règles, aussi appelé *rule-based machine learning* en anglais, de sorte à obtenir le modèle d'apprentissage automatique préentraîné.

Dans une mise en œuvre, l'algorithme d'apprentissage de modèle à base de règles utilise l'une des approches choisies parmi : les règles d'association, les systèmes de classeurs et les systèmes immunitaires artificiels.

L'invention couvre également un support de stockage lisible par ordinateur non transitoire stockant au moins un programme comprenant des instructions, qui lors de l'exécution du programme, permettent d'amener l'ordinateur à assister un internaute dans le remplissage d'au moins un premier champ de formulaire en ligne d'une première page Web selon le deuxième aspect de l'invention.

### Brève description des dessins

D'autres caractéristiques et avantages de l'invention seront mieux compris à la lecture de la description qui va suivre et en référence aux dessins annexés, donnés à titre illustratif et nullement limitatif.
[Fig. 1]La **figure 1** représente un système informatique selon l'invention.
[Fig. 2]La **figure 2** représente un premier procédé selon l'invention.
[Fig. 3]La **figure 3** représente un deuxième procédé selon l'invention.
[Fig. 4]La **figure 4** représente un formulaire en ligne.

Pour des raisons de clarté, les éléments représentés ne sont pas à l'échelle les uns par rapport aux autres, sauf mention contraire.

### Description des modes de réalisation

Le principe général de l'invention est basé sur l'assistance au remplissage de formulaire en ligne. En effet, plutôt que de remplir automatiquement les champs de formulaires en ligne, l'invention propose d'inviter l'internaute à choisir l'objet numérique qui correspond le mieux au champ de formulaire qu'il souhaite remplir.

On entend par objet numérique, un train de bits, comme par exemple : un fichier, un groupe de fichiers, un fichier et des métadonnées qui permettent de le décrire, un fichier accompagné d'une signature électronique, un fichier chiffré ou des données personnelles. On entend par donnée personnelle, toute information relative à une personne physique identifiée ou qui peut être identifiée, directement ou indirectement par référence à un numéro d'identification ou à un ou plusieurs éléments qui lui sont propres. Par exemple, une donnée personnelle peut être un nom, un numéro d'identification, des données de localisation, un identifiant en ligne, ou à un ou plusieurs éléments spécifiques propres à son identité physique, physiologique, génétique, psychique, économique, culturelle ou sociale.

En pratique, l'invention utilise l'apprentissage automatique pour entraîner un modèle capable d'identifier automatiquement les champs de formulaire aptes à recevoir des objets numériques qui correspond à une sémantique prédéterminée. On entend par sémantique, ce qui donne une signification à un objet numérique.

En outre, l'invention utilise une architecture informatique qui comprend des coffres-forts numériques pour stocker les objets numériques. Ainsi, on ne stocke plus les données dans le navigateur Web, mais en lieu sûr sur Internet. En outre, les objets numériques sont, dans des modes préférés de réalisation, stockés dans plusieurs coffres-forts numériques. Avantageusement, il est possible de stocker les objets numériques de sorte qu'aucun des coffres-forts numériques ne stocke tous les objets numériques de l'internaute.

On entend par coffre-fort numérique, un composant d'un système d'information constitué d'un logiciel ou d'une combinaison logiciel/matériel qui permet de préserver l'intégrité d'objets numériques dans le temps. Le coffre-fort numérique peut être accessible grâce à un service en ligne comme les services de coffre-fort numérique suivants : Coffreo, OFSAD, Darwin, E-folia, Digiposte, PeopleDoc ou Xambox. Dans l'invention, un coffre-fort numérique est personnel à un internaute. Ainsi, seul l'internaute peut accéder à ses objets numériques grâce, notamment, à un moyen d'authentification tel que, par exemple, un identifiant et un mot de passe ou un certificat électronique ou une information biométrique.

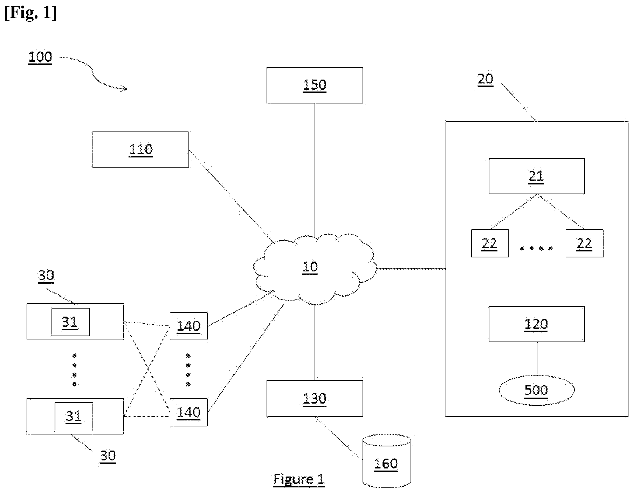

La **figure 1** illustre un système informatique **100** selon l'invention. Le système informatique **100** est prévu pour assister un internaute dans le remplissage d'au moins un premier champ de formulaire en ligne **21** d'une première page Web **20.** Dans une mise en oeuvre particulière, on définit la première page Web **20** selon un langage de balisage hypertexte de type XML, HTML comme, par exemple, le HTML5. Dans la suite de la description, à titre d'illustration, la première page Web **20** est une page Internet qui permet de créer un profil utilisateur sur un site marchand du type Cdiscount ou Amazon.

Dans l'invention, le premier champ de formulaire en ligne **21** est prévu pour recevoir un premier objet numérique de l'internaute.

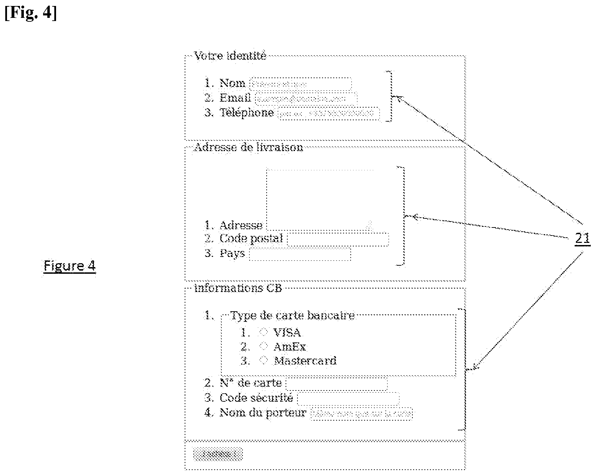

La **figure 4** illustre un exemple de formulaire en ligne qui comprend des premiers champs de formulaire en ligne **21** aptes à recevoir des objets numériques.

Dans l'invention, le premier champ de formulaire en ligne **21** est associé à au moins une métadonnée **22,** aussi appelé *meta tag* ou *meta data* en anglais. On entend par métadonnée toute information de description d'un champ de formulaire tel que le premier champ de formulaire en ligne **21.** En d'autres termes, une métadonnée est une donnée qui sert à définir ou décrire une autre donnée. Notamment, la métadonnée peut permettre d'identifier (p. ex. titre, identifiant, provenance), classer/hiérarchiser (p. ex. classe de style, mots-clés, balises d'accessibilité visuelle, annotation sémantique) ou fournir une information technique (p. ex. format de la donnée, encodage, compression) au premier champ de formulaire en ligne **21.**

Dans un exemple, on représente le premier champ de formulaire en ligne **21** par le code HTML5 suivant :
<label for="nom">Nom:</Iabel> <input type="texte" id="nom" name="nom_utilisateur" placeholder="Entrez votre nom" class="formatage_nom_utilisateur donnée_sensible">.

Dans ce cas, la métadonnée **22** correspond au moins au nom et/ou au contenu de l'un des attributs suivants des balises <label> et <input> : 'type', 'id', 'name', 'placeholder' et 'class'.

Bien sûr, on peut utiliser d'autres attributs sans nécessiter de modification substantielle de l'invention. Dans un exemple, on pourra considérer l'adresse de la Page Web comme une métadonnée selon l'invention. Dans un autre exemple, l'invention considérera également comme métadonnées, les attributs du HTML5 qui sont associés aux microdonnées, aussi appelées *microdata* en anglais, comme 'itemid', 'itemscope', 'itemtype' et 'itemprop'. On pourra se référer au site www.w3.org/TR/microdata/ pour obtenir plus d'informations sur la norme W3C qui concerne les microdonnées.

De retour à la **figure 1****,** le système informatique **100** comprend au moins un navigateur Web **110,** un script **120,** une interface de programmation d'application, ci-après appelée API **130** aussi appelée *application programming interface* en anglais, et des coffres-forts numériques **140,** aussi appelés *digital safes* en anglais.

Tout d'abord, on décrira chacun des composants du système informatique **100.** Ensuite, on présentera une mise en fonctionnement du système informatique **100.**

Dans l'exemple de la **figure 1****,** chaque navigateur Web **110** est configuré pour visiter la première page Web **20** au travers d'un réseau de communication **10** de type filaire ou non filaire.

En outre, dans l'exemple de la **figure 1****,** le script **120** est inséré dans la première page Web **20.** Dans un exemple, le script **120** est un marque-page scripté, aussi appelé *bookmarklet* en anglais. On peut rédiger le script **120** dans un langage interprété comme Jscript (Javascript), VBScript ou tout langage compatible ActiveScripting. Toutefois, selon les besoins, on peut également utiliser un langage compilé. Dans une mise en œuvre particulière, le script **120** peut inclure du code informatique qui, lorsqu'il est exécuté, invite l'internaute à s'authentifier, et ce, avant de pouvoir utiliser les fonctionnalités de l'invention décrites par la suite.

En plus, dans l'exemple de la **figure 1****,** l'API **130** est agencée de manière à communiquer avec le script **120** via le réseau de communication **10.** Dans une mise en œuvre de l'invention, l'API **130** est un ensemble de règles programmées dans un langage de programmation qui permettent d'interagir dynamiquement et d'échanger des données avec le script **120.** En outre, l'API **130** comprend ou peut accéder à fichier, un annuaire ou une base de données **160** qui décrit les types de données stockées dans les coffres-forts numériques **140.**

Enfin, dans l'exemple de la **figure 1****,** chaque coffre-fort numérique **140** est associé à au moins une deuxième page Web **30,** dans laquelle l'internaute a préalablement renseigné au moins un premier objet numérique. Dans la suite de la description, à titre d'illustration, la deuxième page Web **30** est une page Internet de réseautage du type Linkedin, sur laquelle l'internaute possède un profil utilisateur préalablement renseigné. En pratique, on configure le coffre-fort numérique **140** pour stocker le premier objet numérique renseigné par l'internaute dans la deuxième page Web **30.** Quand le système informatique **100** est en fonction, ses composants interagissent entre eux comme indiqué ci-dessous pour assister l'internaute dans le remplissage du premier champ de formulaire en ligne **21** de la première page Web **20.**

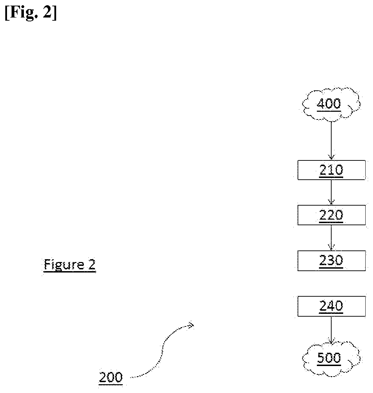

Tout d'abord, le script **120,** lorsqu'il est exécuté, acquiert au moins une métadonnée **22** associée à un premier champ de formulaire en ligne **21.** Ensuite, le script **120** crée un premier vecteur à partir de la métadonnée **22.** Puis, le script **120** envoie à l'API **130** un premier message qui comprend le vecteur. En réponse au premier message, l'API **130** identifie, tout d'abord, une première sémantique prédéterminée qui est associée au premier champ de formulaire en ligne **21,** ci-après appelé SEM1. En pratique, SEM1 est identifié à partir de la métadonnée **22** et d'un modèle d'apprentissage automatique préentraîné **500** à base de règles, aussi appelé *rule-based machine learning* en anglais. À la lumière de la **figure 2****,** plus de détails seront fournis ci-dessous qui concerne l'entraînement d'un modèle d'apprentissage automatique **400** pour obtenir le modèle d'apprentissage automatique préentraîné **500.** Ensuite, l'API **130** identifie l'ensemble des coffres-forts numériques **140** dans lesquels se trouve SEM1, ci-après appelés coffres-forts numériques compatibles. Enfin, l'API **130** envoie au script **120** un second message qui comprend SEM1 et la liste des coffres-forts numériques compatibles **140.**

Par la suite, le script **120,** qui est par exemple agencé de manière à communiquer avec chaque coffre-fort numérique **140** via le réseau de communication **10,** interroge tout ou partie des coffres-forts numériques compatibles **140** à partir de SEM1. Puis, en réponse à l'interrogation du script **120,** chacun desdits coffres-forts numériques **140** retourne au script **120** au moins un premier objet numérique de l'internaute qui correspond à SEM1.

Enfin, en réponse à la réception d'un ou de plusieurs premier objets numériques de l'internaute, le script **120,** lorsqu'il est exécuté, modifie la première page Web **20** pour inviter l'internaute à remplir le premier champ de formulaire en ligne **21** avec au moins un premier objet numérique de l'internaute. Dans un exemple, la modification de la première page Web **20** peut consister à présenter, au niveau du premier champ de formulaire en ligne **21,** une liste déroulante qui comprend plusieurs premier objets numériques de l'internaute et qui proviennent d'un ou de plusieurs coffres-forts numériques **140.**

Dans une mise en oeuvre particulière de la phase d'opération précédente, le système informatique **100** comprend en outre un moteur d'entraînement **150** pour entraîner, en continu, le modèle d'apprentissage automatique préentraîné **500.** Cette mise en œuvre particulière concerne le cas de refus de l'internaute de remplir le premier champ de formulaire en ligne **21** avec le premier objet numérique, mais plutôt avec un deuxième objet numérique de l'internaute qui provient du coffre-fort numérique **140** et qui est associé avec une deuxième sémantique prédéterminée, ci-après appelée SEM2, différente de SEM1. Par exemple, le premier objet numérique correspond à un nom de famille alors que le deuxième objet numérique correspond à un prénom. Dans ce cas, la modification de la première page Web **20** peut consister à présenter, au niveau du premier champ de formulaire en ligne **21,** une liste déroulante qui comprend plusieurs premier et deuxième objets numériques de l'internaute qui proviennent d'un ou de plusieurs coffres-forts numériques **140.**

Dans cette mise en œuvre particulière, le script **120,** lorsqu'il est exécuté, crée un second vecteur à partir de SEM2 et de la métadonnée **22.** Ensuite, le script **120** envoie le second vecteur courant au moteur d'entraînement **150.** En réponse à la réception du second vecteur, le moteur d'entraînement **150** entraîne le modèle d'apprentissage automatique préentraîné **500** à partir du second vecteur et d'un algorithme d'apprentissage de modèle à base de règles, aussi appelé *rule-based machine learning* en anglais.

La **figure 2** illustre un procédé **200** selon l'invention. Le procédé **200** permet d'entraîner un modèle d'apprentissage automatique **400,** pour identifier dans une page Web une sémantique prédéterminée d'au moins un champ de formulaire en ligne. On peut également utiliser le procédé **200** pour réaliser l'entraînement en continu du modèle d'apprentissage automatique préentraîné **500** comme indiqué ci-dessus.

Le procédé **200** nécessite une pluralité de pages Web d'entraînement qui comprennent chacune au moins un champ de formulaire en ligne d'entraînement qui est associé à au moins une métadonnée **22.**

Le procédé **200** consiste tout d'abord, à l'étape **210,** à associer le champ de formulaire en ligne d'entraînement à une sémantique prédéterminée, ci-après appelé SEM. On peut définir les SEM manuellement selon les besoins d'implémentation. On peut également obtenir les SEM de manière assistée, à partir d'un ou plusieurs des métadonnées **22.** Par exemple, on peut utiliser le contenu de l'attribut 'name' pour identifier la sémantique de l'objet numérique. En effet, il est assez probable que l'attribut 'name' associé à un champ de formulaire en ligne qui désigne le nom de famille de l'internaute, comprendra l'un ou plusieurs des textes suivants : 'NOM', 'NOM DE FAMILLE', 'FAMILY NAME'. On peut donc se servir de ces valeurs de texte pour établir les SEM.

De retour au procédé **200,** à l'étape **220,** au moins une métadonnée **22** associée au champ de formulaire en ligne d'entraînement est acquise. Puis, à l'étape **230,** on crée un troisième vecteur à partir du SEM et de la métadonnée **22.** Enfin, à l'étape **240,** on entraîne le modèle d'apprentissage automatique **400** à partir du troisième vecteur et d'un algorithme d'apprentissage de modèle à base de règles, aussi appelé *rule-based machine learning* en anglais, de sorte à obtenir un modèle d'apprentissage automatique préentraîné **500.**

Dans une mise en œuvre particulière, l'algorithme d'apprentissage de modèle à base de règles utilise une approche de classification non supervisée. Par exemple, on peut utiliser l'une des approches choisies parmi : les règles d'association, les systèmes de classeurs et les systèmes immunitaires artificiels.

L'exemple, ci-dessous, décrit une mise en œuvre d'un algorithme d'apprentissage de modèle à base de règles qui utilise l'approche des règles d'association. L'un des avantages de l'approche des règles d'association est que les données d'entrées peuvent être de longueur variable. L'approche des règles d'association est une technique de fouille de données, aussi appelée *data mining* en anglais. Cette approche est traditionnellement liée au secteur de la distribution qui l'utilise pour rechercher des associations entre des produits sur les tickets de caisse. Toutefois, cette approche est également utilisée dans de nombreux secteurs d'activités dans lesquels on recherche des groupements potentiels de produits ou de services : services bancaires, services de télécommunications, par exemple. En outre, elle est également utilisée dans le secteur médical pour la recherche de complications dues à des associations de médicaments ou à la recherche de fraudes grâce à la recherche des associations inhabituelles. Dans le domaine de la distribution, cette approche recherche quels produits tendent à être achetés ensemble. L'approche des règles d'association est dite non supervisée, car on ne dispose en entrée que de la description des achats. Dans l'exemple, l'invention propose d'utiliser cette approche pour déterminer quelles sont les métadonnées **22** qui sont associées à la sémantique d'un objet numérique dans une page Web.

Le **tableau 1,** ci-dessous, est un exemple de données d'entrée utilisables avec l'approche des règles d'association :

**[Tableau 1]**

| | Métadonnée A | Métadonnée B | Métadonnée C | Métadonnée D | SEMA | SEMB | SEMC |
|---|---|---|---|---|---|---|---|
| Champ de formulaire d'entraînement 1 | X | | | X | X | | |
| Champ de formulaire d'entraînement 2 | X | X | X | | | X | |
| Champ de formulaire d'entraînement 3 | X | | | | | | X |
| Champ de formulaire d'entraînement 4 | X | | | X | | | X |
| Champ de formulaire d'entraînement 5 | | X | | X | X | | |

Dans le **tableau 1,** les données d'entrée de l'approche des règles d'association comprennent, pour chaque champ de formulaire en ligne d'entraînement, d'une liste qui comprend les métadonnées **22** associées et la sémantique prédéterminée associée au champ de formulaire en ligne d'entraînement, ci-dessus appelés SEMA, SEMB et SEMC. Par la suite, deux exemples sont donnés pour comprendre comment lire le **tableau 1.** Dans un premier exemple du **tableau 1,** le champ de formulaire en ligne d'entraînement 1 est associé aux métadonnées A et D ainsi qu'à la sémantique prédéterminée SEMA. Dans un autre exemple du **tableau 1,** le champ de formulaire en ligne d'entraînement 3 est associé à la métadonnée D ainsi qu'à la sémantique prédéterminée SEMC.

L'application de l'approche des règles d'association au **tableau 1** produit un ensemble de règles d'association. Une règle d'association est une règle de la forme : 'Si condition alors résultat'.

Dans une mise en œuvre particulière, on peut se limiter à des règles où la condition est une conjonction d'apparition de métadonnées **22** et le résultat comprend une sémantique prédéterminée. Par exemple, on peut obtenir une règle de la forme : Si ('métadonnée A' et 'métadonnée D') alors 'SEMC'. Sémantiquement, une telle règle s'énonce : Si les métadonnées A et D apparaissent simultanément dans les attributs d'un champ de formulaire alors ledit champ de formulaire est du type SEMC.

Pour choisir les règles d'association les plus pertinentes, la personne du métier de la fouille de données pourra utiliser des métriques numériques conventionnelles telles que l'indice de support, l'indice de confiance et l'indice d'amélioration, respectivement appelés *support, confidence* et *lift* en anglais.

Dans une autre mise en œuvre particulière, l'algorithme d'apprentissage de modèle à base de règles utilise une approche de classification supervisée. Dans ce cas, on labélise un vecteur qui comprend l'ensemble des métadonnées **22** associées à chaque champ de formulaire en ligne d'entraînement. En pratique, cela signifie que l'on accompagne chaque vecteur d'un label qui identifie le phénomène à classer, à savoir l'une des sémantiques prédéterminées telles que SEMA, SEMB et SEMC. Dans ce cadre, le modéle d'apprentissage automatique utilisé est un modèle dit prédictif dans lequel on découvre des corrélations significatives entre les métadonnées **22** et les sémantiques prédéterminées, et dans lequel on cherche à généraliser ces corrélations à des cas non encore observés. Un exemple de cette mise en œuvre particulière peut être basé sur la méthode des forêts d'arbres décisionnels, aussi appelée *Random Forest* en anglais.

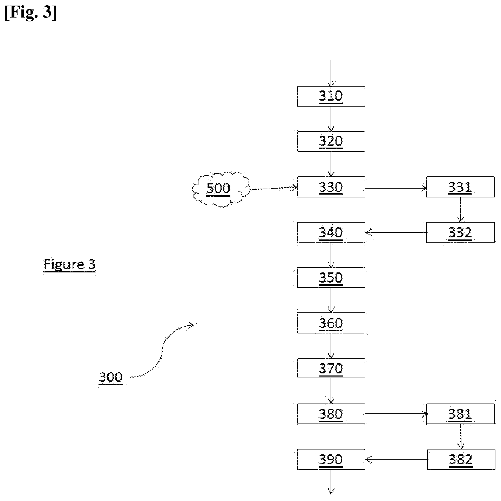

La **figure 3** illustre un procédé **300** selon l'invention. Le procédé **300** permet d'assister un internaute dans le remplissage du premier champ de formulaire en ligne **21** dans la première page Web **20.** Dans le procédé **300,** on définit le navigateur Web **110,** le script **120,** l'API **130,** et le coffre-fort numérique **140** de la même manière que dans l'exemple de la **figure 1****.**

Le procédé **300** consiste tout d'abord, comme indiqué plus haut, à instruire le script **120** pour, lorsqu'il est exécuté :
- acquérir, à l'étape **310,** au moins une métadonnée **22,** et
- créer, à l'étape **320,** un premier vecteur à partir de la métadonnée **22** et l'envoyer à l'API **130,** dans un premier message.

Le procédé **300** consiste ensuite, comme indiqué plus haut, en réponse au premier message, à instruire l'API **130** pour, lorsqu'il est exécuté :
- identifier, à l'étape **330,** une première sémantique prédéterminée associée au premier champ de formulaire en ligne **21,** ci-après appelé SEM1, à partir de la métadonnée **22** et d'un modèle d'apprentissage automatique préentraîné **500** à base de règles, aussi appelé *rule-based machine learning* en anglais. Puis, on identifie l'ensemble des coffres-forts numériques **140** dans lesquels se trouve SEM1, ci-après appelés coffres-forts numériques compatibles, et
- envoyer, à l'étape **340,** au script **120** un second message qui comprend le SEM1 et la liste des coffres-forts numériques compatibles **140.**

Ensuite, en réponse à la réception du second message, le procédé **300** instruit, à l'étape **350,** le script **120** pour interroger tout ou partie des coffres-forts numériques compatibles **140** à partir de SEM1.

Puis, en réponse à l'interrogation du script **120,** le procédé **300** instruit, à l'étape **360,** chacun desdits coffres-forts numériques **140** pour retourner au script **120** au moins un premier objet numérique de l'internaute qui correspond à SEM1.

Enfin, en réponse à la réception d'un ou de plusieurs premier objets numériques de l'internaute, lorsque le script **120** est exécuté, le procédé modifie, à l'étape **380,** la première page Web **20** pour inviter l'internaute à remplir le premier champ de formulaire **21** avec au moins le premier objet numérique.

Dans une mise en œuvre particulière de l'étape **380,** on envisage le cas de refus de l'internaute de remplir le premier champ de formulaire **21** avec le premier objet numérique de l'internaute, mais plutôt avec un deuxième objet numérique de l'internaute qui provient du coffre-fort numérique **140** et qui est associé avec une deuxième sémantique prédéterminée, ci-après appelé SEM2, différente de SEM1.

Dans cette mise en œuvre, le procédé **300** consiste tout d'abord à instruire le script **120** pour, lorsqu'il est exécuté
- créer, à l'étape **381,** un second vecteur à partir de SEM2 et la métadonnée **22,** et
- envoyer, à l'étape **382,** le second vecteur courant à un moteur d'entraînement du modèle d'apprentissage automatique préentraîné **500.**

Ensuite, en réponse à la réception du second vecteur, on entraîne de nouveau le modèle d'apprentissage automatique préentraîné **500,** à l'étape **390,** par un moteur d'entraînement, à partir du second vecteur et d'un algorithme d'apprentissage de modèle à base de règles, aussi appelé *rule-based machine learning* en anglais, comme indiqué plus haut.

Dans un mode particulier de réalisation de l'invention, des instructions de programmes d'ordinateur mettent en œuvre les étapes des procédés **200, 300.** Par conséquent, l'invention vise aussi un programme avec au moins un code de programme d'ordinateur fixé sur un support de stockage non transitoire, et qui est susceptible d'exécuter les étapes des procédés **200, 300** lorsque le programme d'ordinateur est chargé dans l'ordinateur ou exécuté dans l'ordinateur.

On a décrit et illustré l'invention dans la présente description détaillée et dans les figures. Toutefois, la présente invention ne se limite pas aux formes de réalisation présentées. Ainsi, d'autres variantes et modes de réalisation peuvent être déduits et mis en œuvre par la personne du métier à la lecture de la présente description et des figures annexées. Par exemple, le système informatique **100** peut être mis en œuvre dans une application mobile, une application Web ou un assistant vocal.

## Revendications

1. Système informatique (**100**) pour l'assistance au remplissage par un internaute, d'au moins un premier champ de formulaire en ligne (**21**), d'une première page Web (**20**), le premier champ de formulaire en ligne étant prévu pour recevoir un premier objet numérique de l'internaute, en outre, le premier champ de formulaire en ligne étant associé à au moins une métadonnée (**22**), le système informatique comprenant :
- au moins un navigateur (**110**) pour visiter la première page Web au travers d'un réseau de communication (**10**),
- un script (**120**) pour être inséré dans la première page Web,
- des coffres-forts numériques (**140**) qui sont associés à des deuxièmes pages Web (**30**), chaque coffre-fort numérique étant configuré pour stocker au moins un premier objet numérique de l'internaute renseigné dans un formulaire en ligne de la deuxième page Web associée et étant agencé de manière à communiquer avec le script, et
- une interface de programmation d'application, ci-après appelée API (**130**), qui est agencée de manière à communiquer avec le script, et qui comprend une base de données décrivant la sémantique des objets numériques stockés dans le coffre-fort numérique,
et dans lequel,
- le script, lorsqu'il est exécuté,
∘ acquiert la métadonnée,
∘ crée un premier vecteur à partir de la métadonnée,
∘ envoie à l'API un premier message comprenant le vecteur,
- l'API, lorsqu'il est exécuté, en réponse au premier message,
∘ identifie une première sémantique prédéterminée associée au premier champ de formulaire en ligne, ci-après appelé SEM1, à partir de la métadonnée et d'un modèle d'apprentissage automatique préentraîné (**500**) à base de règles,
∘ identifie l'ensemble des coffres-forts numériques dans lesquels se trouve SEM1, ci-après appelés coffres-forts numériques compatibles, et
∘ envoie au script un second message comprenant le SEM1 et la liste des coffres-forts numériques compatibles,
- le script, lorsqu'il est exécuté, en réponse au second message, interroge tout ou partie des coffres-forts numériques compatibles à partir SEM1, de sorte que chacun desdits coffres-forts numériques retourne au script au moins un premier objet numérique de l'internaute correspondant au SEM1, et
- en réponse à la réception d'au moins un premier objet numérique de l'internaute, le script, lorsqu'il est exécuté, modifie la première page Web pour inviter l'internaute à remplir le premier champ de formulaire en ligne avec au moins le premier objet numérique de l'internaute.

2. Système informatique selon la revendication 1, comprenant en outre un moteur d'entraînement (**150**) du modèle d'apprentissage automatique préentraîné, et dans lequel :
- le script, lorsqu'il est exécuté à la suite du refus de l'internaute de remplir le champ de formulaire avec le premier objet numérique de l'internaute, mais plutôt avec un deuxième objet numérique de l'internaute provenant du coffre-fort numérique et qui est associée avec une deuxième sémantique prédéterminée, ci-après appelé SEM2, différente de SEM1,
∘ crée un second vecteur à partir de SEM2 et de la métadonnée, et
∘ envoie le second vecteur courant au moteur d'entraînement,
- en réponse à la réception du second vecteur, le moteur d'entraînement entraîne le modèle d'apprentissage automatique préentraîné (**500**) à partir du second vecteur et d'un algorithme d'apprentissage de modèle à base de règles.

3. Système informatique selon l'une des revendications précédentes, dans lequel le script est un marque-page scripté.

4. Procédé (**300**) d'assistance au remplissage par un internaute, d'au moins un premier champ de formulaire en ligne (**21**) d'une première page Web (**20**), le premier champ de formulaire en ligne étant prévu pour recevoir un premier objet numérique de l'internaute, en outre, le premier champ de formulaire en ligne étant associé à au moins une métadonnée (**22**), le procédé comprenant les étapes suivantes :
- fournir au moins un navigateur (**110**) pour visiter la première page Web au travers d'un réseau de communication (**10**),
- fournir un script (**120**) pour être inséré dans la première page Web,
- fournir des coffres-forts numériques (**140**) qui sont associés à des deuxièmes pages Web (**30**), chaque coffre-fort numérique étant configuré pour stocker au moins un premier objet numérique de l'internaute renseigné dans un formulaire en ligne de la deuxième page Web associée, et étant agencé de manière à communiquer avec le script, et
- fournir une interface de programmation d'application, ci-après appelée API (**130**), qui est agencée de manière à communiquer avec le script, et qui comprend une base de données décrivant la sémantique des objets numériques stockés dans le coffre-fort numérique, et
le procédé comprenant en outre les étapes suivantes,
- instruire le script pour, lorsqu'il est exécuté
∘ acquérir (**310**) la métadonnée,
∘ créer (**320**) un premier vecteur à partir de la métadonnée,
∘ envoyer à l'API un premier message comprenant le vecteur,
- instruire l'API pour, lorsqu'il est exécuté, en réponse au premier message,
∘ identifier une première sémantique prédéterminée associée au premier champ de formulaire en ligne, ci-après appelé SEM1, à partir de la métadonnée et d'un modèle d'apprentissage automatique préentraîné (**500**) à base de règles,
∘ identifier l'ensemble des coffres-forts numériques dans lesquels se trouve SEM1, ci-après appelés coffres-forts numériques compatibles, et
o envoyer au script un second message comprenant le SEM1 et la liste des coffres-forts numériques compatibles,
- instruire le script pour, lorsqu'il est exécuté, en réponse au second message, interroger tout ou partie des coffres-forts numériques compatibles à partir de SEM1, de sorte que chacun desdits coffres-forts numériques retourne au script au moins un premier objet numérique de l'internaute correspondant à SEM1, et
- en réponse à la réception d'au moins un premier objet numérique de l'internaute, lorsque le script est exécuté, modifier (**380**) la première page Web pour inviter l'internaute à remplir le premier champ de formulaire en ligne avec au moins le premier objet numérique de l'internaute.

5. Procédé selon la revendication 4, comprenant en outre les étapes suivantes :
- instruire le script pour, lorsqu'il est exécuté à la suite du refus de l'internaute de remplir le champ de formulaire avec le premier objet numérique de l'internaute, mais plutôt avec un deuxième objet numérique de l'internaute provenant du coffre-fort numérique et qui est associée avec une deuxième sémantique prédéterminée, ci-après appelé SEM2, différente de SEM1,
∘ créer (**381**) un second vecteur à partir de SEM2 et de la métadonnée, et
∘ envoyer (**382**) le second vecteur courant à un moteur d'entraînement du modèle d'apprentissage automatique préentraîné,
- en réponse à la réception du second vecteur, entraîner (**390**), par le moteur d'entraînement, le modèle d'apprentissage automatique préentraîné (**500**) à partir du second vecteur et d'un algorithme d'apprentissage de modèle à base de règles.

6. Procédé selon l'une des revendications 4 à 5, dans lequel le script est un marque-page scripté.

7. Procédé selon l'une des revendications 4 à 6, dans lequel le modèle d'apprentissage automatique préentraîné est obtenu par entraînement d'un modèle d'apprentissage automatique (**400**), l'entrainement du modèle d'apprentissage automatique (**400**) comprenant les étapes suivantes, pour chacun parmi une pluralité de champs de formulaire en ligne d'entraînement provenant d'une pluralité de pages Web d'entraînement, chaque champ de formulaire en ligne d'entraînement étant associé à au moins une métadonnée (**22**) :
- associer (**210**) au champ de formulaire en ligne d'entraînement à une sémantique prédéterminée, ci-après appelé SEM,
- acquérir (**220**) au moins une métadonnée associée au champ de formulaire en ligne d'entraînement,
- créer (**230**) un troisième vecteur à partir de SEM et de la métadonnée,
- entraîner (**240**) le modèle d'apprentissage automatique à partir du troisième vecteur et d'un algorithme d'apprentissage de modèle à base de règles, de sorte à obtenir le modèle d'apprentissage automatique préentraîné (**500**).

8. Procédé selon la revendication 7, dans lequel l'algorithme d'apprentissage de modèle à base de règles utilise l'une des approches choisies parmi : les règles d'association, les systèmes de classeurs et les systèmes immunitaires artificiels.

9. Support de stockage lisible par ordinateur non transitoire stockant au moins un programme comprenant des instructions, qui lors de l'exécution du programme, permettent d'amener l'ordinateur à assister un internaute dans le remplissage d'au moins un premier champ de formulaire en ligne d'une première page Web selon l'une des revendications 4 à 8.

## Patentansprüche

1. Computersystem (100) zur Unterstützung eines Internetnutzers beim Ausfüllen wenigstens eines ersten Online-Formularfeldes (21) einer ersten Webseite (20), wobei das erste Online-Formularfeld dazu vorgesehen ist, ein erstes digitales Objekt des Internetnutzers aufzunehmen, wobei das erste Online-Formularfeld ferner wenigstens einer Metainformation (22) zugeordnet ist, wobei das Computersystem umfasst:
- wenigstens einen Browser (110) zum Besuchen der ersten Webseite über ein Kommunikationsnetz (10),
- ein Skript (120), um in die erste Webseite eingefügt zu werden,
- virtuelle Tresore (140), die zweiten Webseiten (30) zugeordnet sind, wobei jeder virtuelle Tresor dazu konfiguriert ist, wenigstens ein erstes digitales Objekt des Internetnutzers zu speichern, das in ein Online-Formular der zugeordneten zweiten Webseite eingegeben wurde, und dazu angeordnet ist, mit dem Skript zu kommunizieren, und
- eine Anwendungsprogrammierschnittstelle, im Folgenden API (130) genannt, die dazu angeordnet ist, mit dem Skript zu kommunizieren, und die eine Datenbank umfasst, die die Semantik der im virtuellen Tresor gespeicherten digitalen Objekte beschreibt,
und wobei
- das Skript bei seiner Ausführung
∘ die Metainformation erfasst,
∘ basierend auf der Metainformation einen ersten Vektor erstellt,
∘ eine erste Nachricht, die den Vektor umfasst, an die API sendet,
- die API bei ihrer Ausführung als Antwort auf die erste Nachricht,
∘ eine erste vorbestimmte Semantik, die dem ersten Online-Formularfeld, im Folgenden SEM1 genannt, zugeordnet ist, basierend auf der Metainformation und einem vortrainierten, regelbasierten maschinellen Lernmodell (500) identifiziert,
∘ alle virtuellen Tresore, in denen sich SEM1 befindet, im Folgenden als kompatible virtuelle Tresore bezeichnet, identifiziert und
∘ dem Skript eine zweite Nachricht sendet, die SEM1 und die Liste der kompatiblen virtuellen Tresore umfasst,
- das Skript bei seiner Ausführung als Antwort auf die zweite Nachricht alle oder einige der kompatiblen virtuellen Tresore von SEM1 abfragt, so dass jeder der virtuellen Tresore wenigstens ein erstes digitales Objekt des Internetnutzers, das SEM1 entspricht, an das Skript zurücksendet, und
- als Reaktion auf den Empfang wenigstens eines ersten digitalen Objekts des Internetnutzers das Skript bei seiner Ausführung die erste Webseite modifiziert, um den Internetnutzer dazu aufzufordern, das erste Online-Formularfeld mit wenigstens dem ersten digitalen Objekt des Internetnutzers auszufüllen.

2. Computersystem nach Anspruch 1, welches ferner einen Trainingsantrieb (150) des vortrainierten maschinellen Lernmodells umfasst, und wobei:
- das Skript bei seiner Ausführung, nachdem der Internetnutzer sich geweigert hat, das Formularfeld mit dem ersten digitalen Objekt des Internetnutzers auszufüllen, und stattdessen ein zweites digitales Objekt des Internetnutzers aus dem digitalen Tresor verwendet, das einer zweiten vorbestimmten Semantik, im Folgenden SEM2 genannt, die sich von SEM1 unterscheidet, zugeordnet ist,
∘ einen zweiten Vektor basierend auf SEM2 und der Metainformation erstellt, und
∘ den aktuellen zweiten Vektor an den Trainingsantrieb sendet,
- als Reaktion auf den Empfang des zweiten Vektors der Trainingsantrieb das vortrainierte maschinelle Lernmodell (500) basierend auf dem zweiten Vektor und einem regelbasierten Modelllernalgorithmus trainiert.

3. Computersystem nach einem der vorhergehenden Ansprüche, wobei das Skript ein Skript-Lesezeichen ist.

4. Verfahren (300) zur Unterstützung des Ausfüllens wenigstens eines ersten Online-Formularfelds (21) einer ersten Webseite (20) durch einen Internetnutzer, wobei das erste Online-Formularfeld dazu vorgesehen ist, ein erstes digitales Objekt des Internetnutzers aufzunehmen, wobei ferner das erste Online-Formularfeld wenigstens einer Metainformation (22) zugeordnet ist, wobei das Verfahren die folgenden Schritte umfasst:
- Bereitstellen wenigstens eines Browsers (110), um die erste Webseite über ein Kommunikationsnetz (10) zu besuchen,
- Bereitstellen eines Skripts (120) zum Einfügen in die erste Webseite,
- Bereitstellen von virtuellen Tresoren (140), die zweiten Webseiten (30) zugeordnet sind, wobei jeder virtuelle Tresor dazu konfiguriert ist, wenigstens ein erstes digitales Objekt des Internetnutzers zu speichern, das in ein Online-Formular der zugehörigen zweiten Webseite eingegeben wurde, und dazu angeordnet ist, mit dem Skript zu kommunizieren; und
- Bereitstellen einer Anwendungsprogrammierschnittstelle, im Folgenden API (130) genannt, die dazu angeordnet ist, mit dem Skript zu kommunizieren, und die eine Datenbank umfasst, die die Semantik der in dem virtuellen Tresor gespeicherten digitalen Objekte beschreibt, und
wobei das Verfahren ferner die folgenden Schritte umfasst,
- Anweisen des Skripts, um bei seiner Ausführung
∘ die Metainformation zu erfassen (310),
∘ einen ersten Vektor basierend auf der Metainformation zu erstellen (320),
∘ der API eine erste Nachricht zu senden, die den Vektor umfasst,
- Anweisen der API, um bei ihrer Ausführung, als Antwort auf die erste Nachricht,
∘ eine erste vorbestimmte Semantik, im Folgenden SEM1 genannt, die dem ersten Online-Formularfeld zugeordnet ist, basierend auf der Metainformation und einem vortrainierten, regelbasierten maschinellen Lernmodell (500) zu identifizieren,
∘ alle virtuellen Tresore zu identifizieren, in denen sich SEM1 befindet, im Folgenden kompatible virtuelle Tresore genannt, und
∘ dem Skript eine zweite Nachricht zu senden, die SEM1 und die Liste der kompatiblen virtuellen Tresore umfasst,
- Anweisen des Skripts, um bei seiner Ausführung als Antwort auf die zweite Nachricht alle oder einige der kompatiblen virtuellen Tresore von SEM1 abzufragen, so dass jeder der virtuellen Tresore an das Skript wenigstens ein erstes digitales Objekt des Internetnutzers, das SEM1 entspricht, zurücksendet, und
- als Reaktion auf den Empfang wenigstens eines ersten digitalen Objekts des Internetnutzers bei Ausführung des Skripts, Modifizieren der ersten Webseite (380), um den Internetnutzer aufzufordern, das erste Online-Formularfeld mit wenigstens dem ersten digitalen Objekt des Internetnutzers auszufüllen.

5. Verfahren nach Anspruch 4, das ferner die folgenden Schritte umfasst:
- Anweisen des Skripts, wenn es aufgrund der Weigerung des Internetnutzers, das Formularfeld mit dem ersten digitalen Objekt des Internetnutzers auszufüllen, ausgeführt wird, stattdessen ein zweites digitales Objekt des Internetnutzers aus dem virtuellen Tresor zu verwenden, das einer zweiten vorbestimmten Semantik zugeordnet ist, im Folgenden als SEM2 bezeichnet, die sich von SEM1 unterscheidet,
∘ Erzeugen (381) eines zweiten Vektors basierend auf SEM2 und der Metainformation, und
∘ Senden (382) des aktuellen zweiten Vektors an einen Trainingsantrieb des vortrainierten maschinellen Lernmodells,
- als Reaktion auf den Empfang des zweiten Vektors, Trainieren (390) des vortrainierten maschinellen Lernmodells (500) durch den Trainingsantrieb basierend auf dem zweiten Vektor und einem regelbasierten Modell-Lernalgorithmus.

6. Verfahren nach einem der Ansprüche 4 bis 5, wobei das Skript ein Skript-Lesezeichen ist.

7. Verfahren nach einem der Ansprüche 4 bis 6, wobei das vortrainierte maschinelle Lernmodell durch Trainieren eines maschinellen Lernmodells (400) erhalten wird, wobei das Trainieren des maschinellen Lernmodells (400) die folgenden Schritte für jedes einer Mehrzahl von Trainings-Online-Formularfeldern aus einer Mehrzahl von Trainings-Webseiten umfasst, wobei jedes Trainings-Online-Formularfeld mit wenigstens einer Metadateneinheit (22) zugeordnet ist:
- Zuordnen (210) des Trainings-Online-Formularfelds zu einer vorbestimmten Semantik, im Folgenden SEM genannt,
- Erfassen (220) wenigstens einer Metainformation, die dem Trainings-Online-Formularfeld zugeordnet ist,
- Erstellen (230) eines dritten Vektors basierend auf SEM und der Metainformation,
- Trainieren (240) des maschinellen Lernmodells basierend auf dem dritten Vektor und einem regelbasierten Modell-Lernalgorithmus, um das vortrainierte maschinelle Lernmodell (500) zu erhalten.

8. Verfahren nach Anspruch 7, wobei der regelbasierte Modell-Lernalgorithmus einen der folgenden Ansätze verwendet: Assoziationsregeln, Ordnersysteme und künstliche Immunsysteme.

9. Computerlesbares, nicht-transitorisches Speichermedium, das wenigstens ein Programm speichert, das Anweisungen umfasst, die bei der Ausführung des Programms den Computer dazu veranlassen, einen Internetnutzer beim Ausfüllen wenigstens eines ersten Online-Formularfeldes einer ersten Webseite nach einem der Ansprüche 4 bis 8 zu unterstützen.

## Claims

1. A computer system (**100**) for assisting an Internet user with the completion of at least one first online form field (**21**) of a first Web page (**20**), the first online form field being provided to receive a first digital object from the Internet user, furthermore, the first online form field being associated with at least one metadatum (**22**), the computer system comprising:
- at least one browser (**110**) for visiting the first web page through a communication network (**10**),
- a script (**120**) for being inserted into the first web page,
- digital safes (**140**) which are associated with second web pages (**30**), each digital safe being configured to store at least one first digital object of the Internet user entered in an online form of the associated second web page and being arranged so as to communicate with the script, and
- an application programming interface, hereinafter called API (**130**), which is arranged so as to communicate with the script, and which comprises a database describing the semantics of the digital objects stored in the digital safe,
and wherein,
- the script, when executed,
∘ acquires the metadata,
∘ creates a first vector from the metadata,
∘ sends a first message comprising the vector to the API,
- the API, when executed, in response to the first message,
∘ identifies a first predetermined semantics associated with the first online form field, hereinafter referred to as SEM1, from the metadata and a pre-trained rule-based machine learning model (**500**),
∘ identifies the set of digital safes in which SEM1 is located, hereinafter referred to as compatible digital safes, and
∘ sends a second message comprising the SEM1 and the list of compatible digital safes to the script,
- the script, when executed, in response to the second message, queries all or some of the compatible digital safes from SEM1, such that each of said digital safes returns at least one first digital object of the Internet user corresponding to the SEM1 to the script, and
- in response to receiving at least one first digital object of the Internet user, the script, when executed, modifies the first web page to invite the Internet user to complete the first online form field with at least the first digital object of the Internet user.

2. The computer system according to claim 1, further comprising a training engine (**150**) of the pre-trained machine learning model, and wherein:
- the script, when executed following the refusal of the Internet user to complete the form field with the first digital object of the Internet user, but rather with a second digital object of the Internet user from the digital safe and which is associated with a second predetermined semantics, hereinafter called SEM2, different from SEM1,
∘ creates a second vector from SEM2 and the metadata, and
∘ sends the second current vector to the training engine,
- in response to receiving the second vector, the training engine trains the pre-trained machine learning model (**500**) from the second vector and a rule-based model training algorithm.

3. The computer system according to one of the preceding claims, wherein the script is a scripted bookmark.

4. A method (**300**) for assisting an Internet user with the completion of at least one first online form field (**21**) of a first web page (**20**), the first online form field being provided to receive a first digital object from the Internet user, furthermore, the first online form field being associated with at least one metadatum (**22**), the method comprising the following steps:
- providing at least one browser (**110**) for visiting the first web page through a communication network (**10**),
- providing a script (**120**) for being inserted into the first web page,
- providing digital safes (**140**) which are associated with second web pages (**30**), each digital safe being configured to store at least one first digital object of the Internet user entered in an online form of the associated second web page, and being arranged so as to communicate with the script, and
- providing an application programming interface, hereinafter referred to as API (**130**), which is arranged so as to communicate with the script, and which comprises a database describing the semantics of the digital objects stored in the digital safe, and the method further comprising the following steps,
- instructing the script to, when executed
∘ acquiring (**310**) the metadata,
∘ creating (**320**) a first vector from the metadata,
∘ sending a first message comprising the vector to the API,
- instructing the API to, when executed, in response to the first message,
∘ identifying a first predetermined semantics associated with the first online form field, hereinafter referred to as SEM1, from the metadata and a pre-trained rule-based machine learning model (**500**),
∘ identifying the set of digital safes in which SEM1 is located, hereinafter referred to as compatible digital safes, and
∘ sending a second message comprising the SEM1 and the list of compatible digital safes to the script,
- instructing the script to, when executed, in response to the second message, query all or some of the compatible digital safes from SEM1, such that each of said digital safes returns at least one first digital object of the Internet user corresponding to the SEM1 to the script, and
- in response to receiving at least one first digital object of the Internet user, when the script is executed, modifying the first web page to invite the Internet user to complete the first online form field with at least the first digital object of the Internet user.

5. The method according to claim 4, further comprising the following steps:
- instructing the script to, when executed following the user's refusal to complete the form field with the user's first digital object, but instead with a second digital object of the user from the digital safe and which is associated with a second predetermined semantics, hereinafter called SEM2, different from SEM1,
∘ creating (**381**) a second vector from SEM2 and the metadata, and
∘ sending (**382**) the current second vector to a training engine of the pre-trained machine learning model,
- in response to receiving the second vector, training (**390**), by the training engine, the pre-trained machine learning model (**500**) from the second vector and a rule-based model training algorithm.

6. The method according to one of claims 4 to 5, wherein the script is a scripted bookmark.

7. The method according to one of claims 4 to 6, wherein the pre-trained machine learning model is obtained by training a machine learning model (**400**), training the machine learning model (**400**) comprising the following steps, for each of a plurality of training online form fields from a plurality of training web pages, each training online form field being associated with at least one metadatum (**22**):
- associating (**210**) the training online form field with a predetermined semantics, hereinafter referred to as SEM,
- acquiring (**220**) at least one metadatum associated with the training online form field,
- creating (**230**) a third vector from SEM and the metadata,
- training (**240**) the machine learning model from the third vector and a rule-based model learning algorithm, so as to obtain the pre-trained machine learning model (**500**).

8. The method according to claim 7, wherein the rule-based model learning algorithm uses one of the approaches selected from: the association rules, the classifier systems and the artificial immune systems.

9. A non-transitory computer-readable storage medium storing at least one program comprising instructions, which upon execution of the program, allow causing the computer to assist an Internet user with the completion of at least one first online form field of a first web page according to one of claims 4 to 8.
